# EUROPEAN PATENT APPLICATION

(11) **EP 4 647 623 A1**
(43) Date of publication of application: **12.11.2025**
(21) Application number: 25174712.7
(22) Date of filing: 07.05.2025
(51) Int. Cl.: F16C 13/02

(54) **BEARING BLOCK ASSEMBLY FOR CALENDER ROLLERS, SYSTEMS AND METHODS THEREOF**

(30) Priority: 10.05.2024 US 202418661363
(71) Applicant: Tesla, Inc., Austin, TX 78725 (US)
(72) Inventor: MATSUMOTO, Matthew, Austin, TX, 78725 (US); EGGLESTON, Bonne, Austin, TX, 78725 (US)
(74) Representative: Liesegang, Eva

(57) **Abstract**

A bearing block assembly for supporting a calender roll having a housing including a preload access port, a base surface, and a first side and a second side. A first contact surface on the first side extends from the base surface at a first angle, and a second contact surface on the second side extends from the base surface at a second angle. Within the housing is a first bearing block having a first bearing block surface and a first bearing bore, a second bearing block having a second bearing block surface and a second bearing bore, and a third bearing block having a preload surface and a third bearing bore. The first bearing block surface is disposed over the first contact surface, the second bearing block surface is disposed over the second contact surface, and the preload surface is positioned between the preload access port and the base surface.

## Description

### BACKGROUND

### Field

The present disclosure related generally to bearing block assemblies, particularly bearing block assemblies for supporting a calender roll.

### Description of the Related Art

Bearing block assemblies are used in a variety of applications to support cylindrical rollers. In calendering applications, the bearings in these assemblies support the calender rolls while the calender rolls are subjected to high loads, which are necessary to calender hard materials. For example, bearings may be supported in the horizontal direction by applying a tension force between adjacent bearing block assemblies. However, such assemblies may not sufficiently support bearings when calendering hard materials, such a cathode battery active materials (e.g., lithium nickel manganese cobalt oxide ("NMC")).

Accordingly, there is a need for a bearing block assembly with improved support for a calender roll.

### SUMMARY

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a bearing block assembly for supporting a calender roll. The assembly includes a housing having a preload access port, a base surface, and a first side and a second side separated by a midplane perpendicular to the base surface, where a first contact surface extends from the base surface at a first angle and is located in the first side, and a second contact surface extends from the base surface at a second angle and is located in the second side, a first bearing block disposed within the housing and having a first bearing block surface and a first bearing bore, where the first bearing block surface is disposed over the first contact surface, a second bearing block disposed within the housing and having a second bearing block surface and a second bearing bore, where the second bearing block surface is disposed over the second contact surface, and a third bearing block disposed within the housing and having a preload surface and a third bearing bore, where the preload surface is positioned between the preload access port and the base surface.

In some embodiments, the housing includes the first contact surface and the second contact surface. In some embodiments, the first contact surface is disposed on a first support block and the second contact surface is disposed on a second support block, and the first and second support blocks are positioned within the housing. In some embodiments, each of the first angle and the second angle are congruent angles. In some embodiments, the housing includes a preload force applicator. In some embodiments, the preload force applicator contacts the preload surface. In some embodiments, the assembly may include a fourth bearing block disposed within the housing, the fourth bearing block comprising a fourth bearing bore. In some embodiments, the first bearing block and second bearing block are disposed between the third bearing block and fourth bearing block. In some embodiments, the assembly may include a plurality of bearings. In some embodiments, each of the plurality of bearings is a roller bearing. In some embodiments, the plurality of bearings includes a first pair of bearings disposed in the first bearing bore, a second pair of bearings disposed in the second bearing bore, a third pair of bearings disposed in the third bearing bore, and a fourth pair of bearings disposed in the fourth bearing bore. In some aspects, the techniques described herein relate to a system for supporting a calender roll. The system may include a bearing block assembly and a calender roll having a first journal disposed within the first, second and third bearing bores. In some embodiments, the system also includes an additional bearing block assembly having an additional bearing bore, where the calender roll has a second journal disposed within the additional bearing bore.

In some aspects, the techniques described herein relate to a method for supporting a calender roll. The method includes, applying a preload force to a first surface, thereby causing: the preload force to be transmitted to a first bearing disposed against a journal of a calender roll, a first reaction force to be applied to a second bearing disposed against the journal, and a second reaction force to be applied to a third bearing disposed against a journal in a third direction, where the preload force is in a first direction, the first reaction force is in a second direction, and the second reaction force is in a third direction, and where each of the first direction, the second direction, and the third direction are different directions.

In some embodiments, the method includes reducing a vibration in the calender roll. In some embodiments, the preload force is at least about 100kN. In some embodiments, the first direction is in the same direction as a gravitational force. In some embodiments, the first reaction force comprises a vertical component and a horizontal component. In some embodiments, the second reaction force comprises a vertical component and a horizontal component. In some embodiments, the method includes reducing play in the first bearing, the second bearing, and the third bearing.

### BRIEF DESCRIPTION OF THE DRAWINGS

The present inventions are described with reference to the accompanying drawings, in which like reference characters reference like elements, and wherein:
FIG. 1 is a perspective view illustration of a calender roll system comprising pairs of adjacent bearing block assemblies and adjacent calender rolls, according to some embodiments.
FIG. 2A is a cross-sectional perspective view illustration of a system comprising a bearing block assembly and a calender roll, according to some embodiments.
FIG. 2B is a cross-sectional perspective view illustration of a system comprising adjacent bearing block assemblies and adjacent calender rolls, according to some embodiments.
FIG. 2C is a cross-sectional illustration of a preload bearing block of a bearing block assembly, according to some embodiments.
FIG. 2D is a cross-sectional illustration of a first reaction bearing block of a bearing block assembly, according to some embodiments.
FIG. 2E is a cross-sectional illustration of a second reaction bearing block of a bearing block assembly, according to some embodiments.
FIG. 3 is an illustration of the forces applied to the bearing blocks of a bearing block assembly, according to some embodiments.
FIG. 4 is a flow chart of a method of supporting a calender roll, according to some embodiments.
FIG. 5A is an experimental chart showing bearing block displacement without the use of a preload force.
FIG. 5B is an experimental chart showing bearing block displacement with a preload force, according to some embodiments.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to a bearing block assembly which can support a journal of a calender roll. Each bearing block assembly can include a plurality of bearings which are constrained so as to load the bearings in three or more opposing directions around the journal while applying a single preload force. Two calender rolls can be positioned adjacent to one another to calender hard materials, such as cathode active materials (e.g., lithium nickel manganese cobalt oxide ("NMC")).

Such bearing configurations advantageously reduce minute bearing play, increase bearing stiffness, and/or reduce bearing vibration when calender rollers are subjected to high loads while calendering material. Because bearing play and vibration are reduced and bearing stiffness is increased, bearing wear is reduced and the quality of the calendered material is improved.

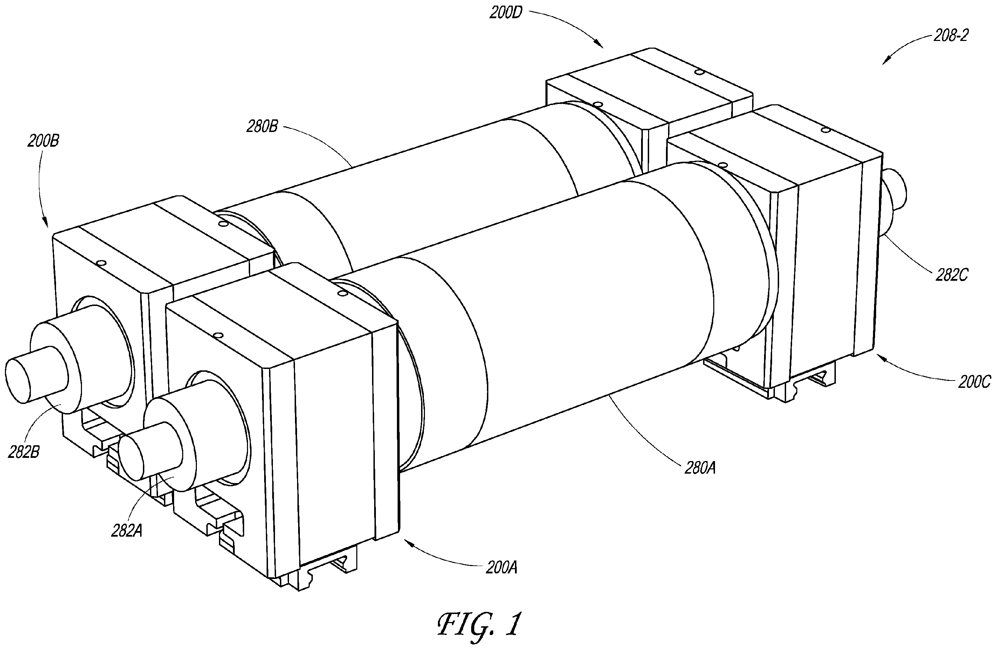

FIG. 1 is a perspective view of a calender roll system 208-2 including adjacent calender rolls 280A and 280B, according to some embodiments. The calender roll 280A is supported on opposite ends by a first bearing block assembly 200A and a second bearing block assembly 200C. The calender roll 280B is supported on opposite ends by a third bearing block assembly 200B and a fourth bearing block assembly 200D. The first bearing block assembly 200A supports a first journal 282A positioned at a first end of the first calender roll 280A. The second bearing block assembly 200C supports a second journal 282C positioned at a second end of the first calender roll 280A. The third bearing block assembly 200B supports a first journal 282B positioned at a first end of the second calender roll 280B. The fourth bearing block assembly 200D supports a second journal 282D positioned at a second end of the second calender roll 280B. The calender rolls 280A and 280B are positioned adjacent to each other.

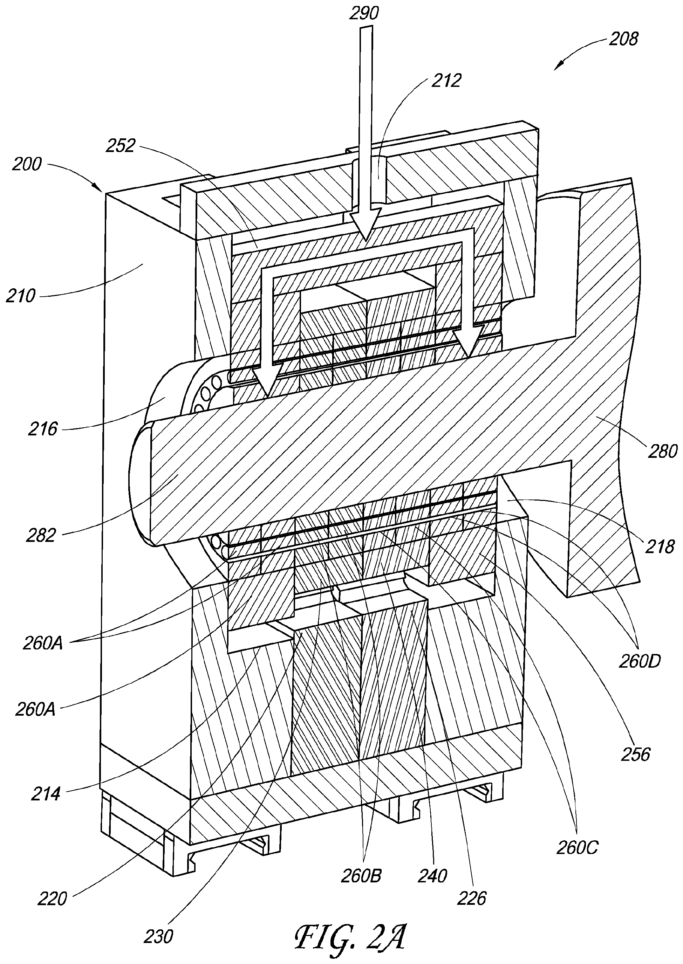

FIG. 2A shows a cross-sectional perspective view illustration of a system 208 comprising a bearing block assembly 200 and a calender roll 280 supported by the bearing block assembly 200. The bearing block assembly 200 includes a housing 210 with a base surface 214. A first support block 220, a second support block 226, a first preload bearing block 250, a first reaction bearing block 230, a second reaction bearing block 240, a second preload bearing block 256, and a preload surface 252 are each positioned within the housing 210. The first reaction bearing block 230 is positioned over the first support block 220, and the second reaction bearing block 240 is positioned over the second support block 226. The first preload bearing block 250 and the second preload bearing block 256 are each positioned over the base surface 214 of the housing 210. The first reaction bearing block 230 and the second reaction bearing block 240 are disposed between the first preload bearing block 250 and second preload bearing block 256. Thus, the first reaction bearing block 230 and the second reaction bearing block 240 are inner bearing blocks and the first preload bearing block 250 and the second preload bearing block 256 are outer bearing blocks. The preload surface 252 contacts the first preload bearing block 250 and the second preload bearing block 256. There is clearance between the preload surface 252 and the first reaction bearing block 230, and between the preload surface 252 and the second reaction bearing block 240.

In some embodiments, the first support block and the second support block can be integral to the housing, which can advantageously simplify the number of components in the system. In some embodiments, the first support block and the second support block can be separate components which are inserted into the housing. When the first support block and the second support block are separate components from the housing it can advantageously aid in the manufacturing of the first support block and the second support block.

While each example described herein refers to the reaction bearing blocks 230 and 240 being positioned between the preload bearing blocks 250 and 256, the bearing block assembly is not limited to this configuration. For example, in some embodiments, the preload bearing blocks and can be positioned between the reaction bearing blocks and, the first reaction bearing block and the first preload bearing block can be positioned between the second reaction bearing block and the second preload bearing block, or the second reaction bearing block and the second preload bearing block can be positioned between the first reaction bearing block and the first preload bearing block. In another example, in some embodiments, the bearing block assembly may include a first preload bearing block, a first reaction bearing block, and a second reaction bearing block. In each example described herein, the first reaction bearing block is positioned over the first support block and the second reaction bearing block is positioned over the second support block.

The housing 210 is shown with a preload access port 212 located in the top surface of the housing 210, wherein a preload force 290 can be applied to the preload surface 252 through the preload access port 212. The preload force 290 is shown applied vertically downward and in the same direction as gravitational force. The preload force 290 is transferred into the first preload bearing block 250 and the second preload bearing block 256 through the preload surface 252. In some embodiments, the preload force can be applied at any angle (e.g., vertically, horizontally, diagonally) that may aid in countering the forces exhibited on the calender roll during the calender process.

The housing 210 also includes calender roll access ports 216 and 218. The calender roll access ports are openings in the housing 210 positioned on opposite sides of the housing 210. The first calender roll access port 216 is adjacent to the first preload bearing block 250 and the second calender roll access port 218 is adjacent to the second preload bearing block 256. The calender roll 280 has a journal 282 which passes through the calender roll access ports 216 and 218.

The calender roll access ports 216 and 218 can be any shape. For example, in some embodiments, each of the calender roll access ports may be individually selected from circular, rectangular, or another polygonal shape. The calender roll access ports 216 and 218 can be sized to allow clearance for the journal 282 to pass through the housing 210.

A pair of first preload bearings 260A are disposed in the first preload bearing block 250; a pair of first reaction bearings 260B are disposed in the first reaction bearing block 230; a pair of second reaction bearings 260C are disposed in the second reaction bearing block 240; and a pair of second preload bearings 260D are disposed in the second preload bearing block 256. The journal 282 passes through the calender roll access ports 216 and 218 and each of the pairs of bearings 260A-260D. Through this arrangement, the journal 282 is supported by each of the pairs of bearings 260A-260D.

In some embodiments, a single preload bearing can be disposed in the first preload bearing block; a single reaction bearing can be disposed in the first reaction bearing block; a single second reaction bearing can be disposed in the second reaction bearing block; and a single second preload bearing can be disposed in the second preload bearing block.

The bearings 260A-260D are described herein as roller bearings but other types of bearings may be included in the system 208. For example, in some embodiments, each bearing can be individually selected from cylindrical roller bearings, ball bearings, needle roller bearings, sleave bearings, or any other bearing designed to handle radial loads. In some embodiments, each bearing can be individually selected from stainless steel bearings, ceramic bearings, carbon steel bearings, plastic bearings, or other bearing materials for high radial load applications. In some embodiments, a bearing may also include a coating to deliver resistance to wear.

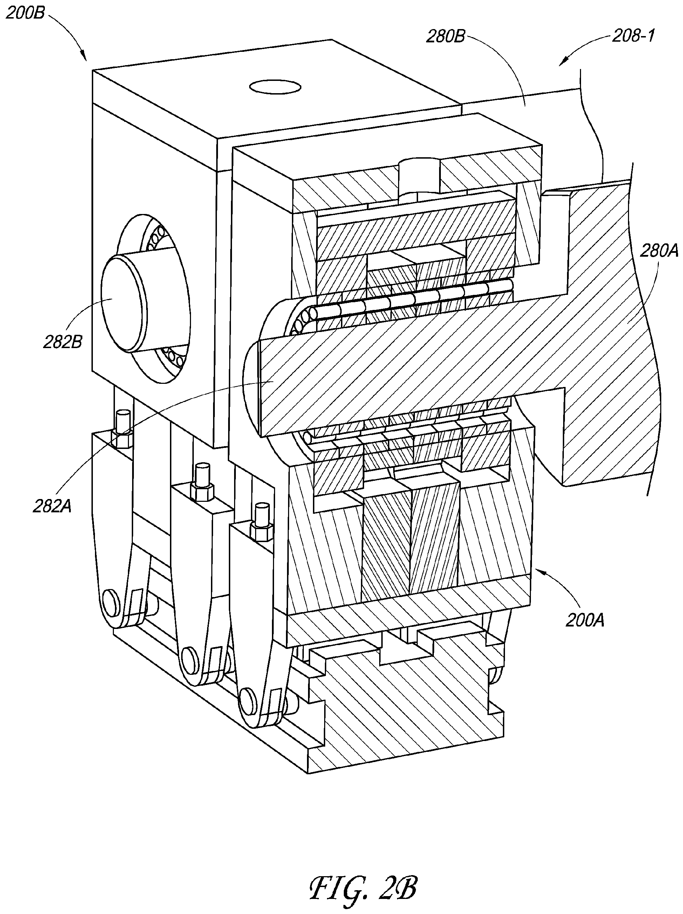

FIG. 2B is a cross-sectional perspective view illustration of a system 208-1 including adjacent bearing block assemblies 200A and 200B and adjacent calender rolls 280A and 280B, according to some embodiments. The first bearing block assembly 200A supports a first journal 282A of the first calender roll 280A. The second bearing block assembly 200B supports a second journal 282B of the second calender roll 280B. The first bearing block assembly 200A is positioned next to the second bearing block assembly 200B. The axes of the first calender roll 280A and the second calender roll 280B are parallel to each other and are aligned at the same height. Each bearing block assembly 200A and 200B and calender roll 280A and 280B shown may be similar to bearing block assembly 200 and calender roll 280 of FIG. 2A. In some embodiments, the axes of the first calender roll and the second calender roll may be parallel to each and be aligned at different heights, for example, the axes may have a vertical offset from one another.

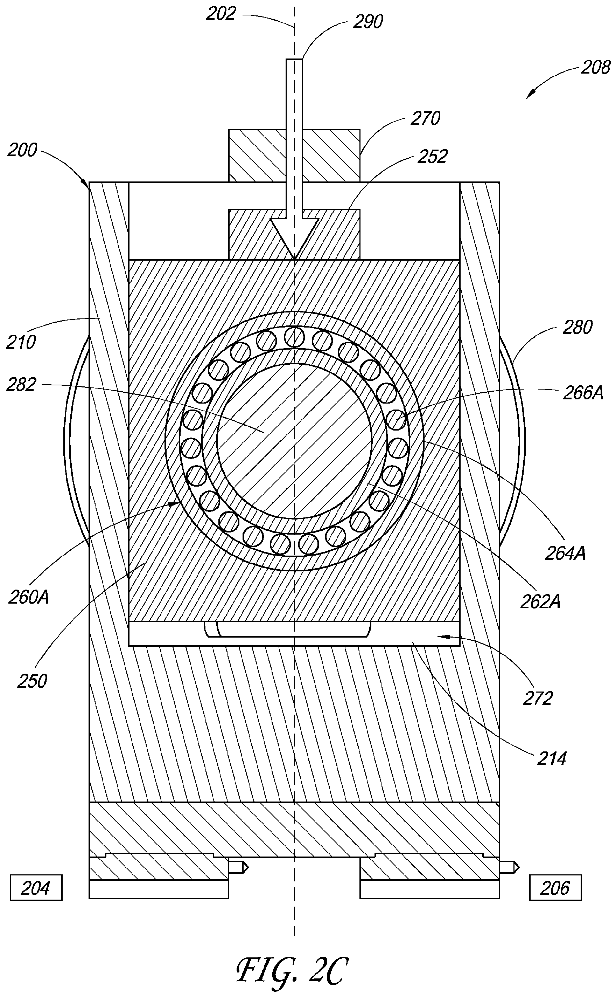

FIG. 2C is a section view of the system 208 of FIG. 2A illustrating the first preload bearing block 250. As shown, the first preload bearing block 250 is a rectangular block having a bearing bore passing through its center wherein a bearing 260A is disposed in the bearing bore. The system 208 has a midplane 202 which is perpendicular to the base surface and intersects the central axis of the bearing bore and the bearing 260A. A first side 204 and a second side 206 are on opposite sides of the midplane 202. The bearing 260A is a roller bearing having an outer race 264A, an inner race 262A, and a roller element 266A disposed between the inner race 262A and the outer race 264A. The journal 282 of a calender 280 passes through the inner race 262A of the bearing 260A. There is a clearance 272 between the base surface 214 and the bottom of the first preload bearing block 250 when the journal 282 passes through inner race 262A. A preload force applicator 270 applies a preload force 290 through the preload access port 212 (not shown in FIG. 2C) to a preload surface 252. The preload surface 252 is disposed on the first preload bearing block 250 and the preload force 290 is transferred to the first preload bearing block 250. The clearance 272 between the base surface 214 and the bottom of the first preload bearing block 250 advantageously allows the bearing 260A to transfer the preload force 290 from the first preload bearing block 250 into the journal 282. The second preload bearing block 256 includes substantially the same structure and arrangement within the bearing block assembly as the first preload bearing block 250.

In some embodiments, the preload force 290 can be larger than 50kN, for example between 100kN and 400kN. In some embodiments, the preload force is, is about, is at least, or is at least about, 50kN, 75kN, 100kN, 125kN, 150kN, 175kN, 200kN, 225kN, 250kN, 275kN, 300kN, 325kN, 350kN, 375kN or 400kN, or any range of values therebetween. The preload force may be adjusted depending on operation parameters of the calender roll system.

A preload bearing block can take other shapes than a rectangular block. For example, in some embodiments, a preload bearing block may include a bottom surface on the surface of the preload bearing block closest to the base surface of the housing. The bottom surface can be curved or angled to increase the clearance of the bottom surface from the base surface.

In some embodiments, the preload surface can be integral to a preload bearing block. In some embodiments, the preload surface can be a separate component situated adjacent to an upper surface of a preload bearing block.

In some embodiments, the preload force applicator can be a screw press, a cam press, a hydraulic press, or a pneumatic press. Advantageously, the preload force applicator applies a single preload which increases the bearing stiffness and reduces bearing play thereby reducing bearing vibration.

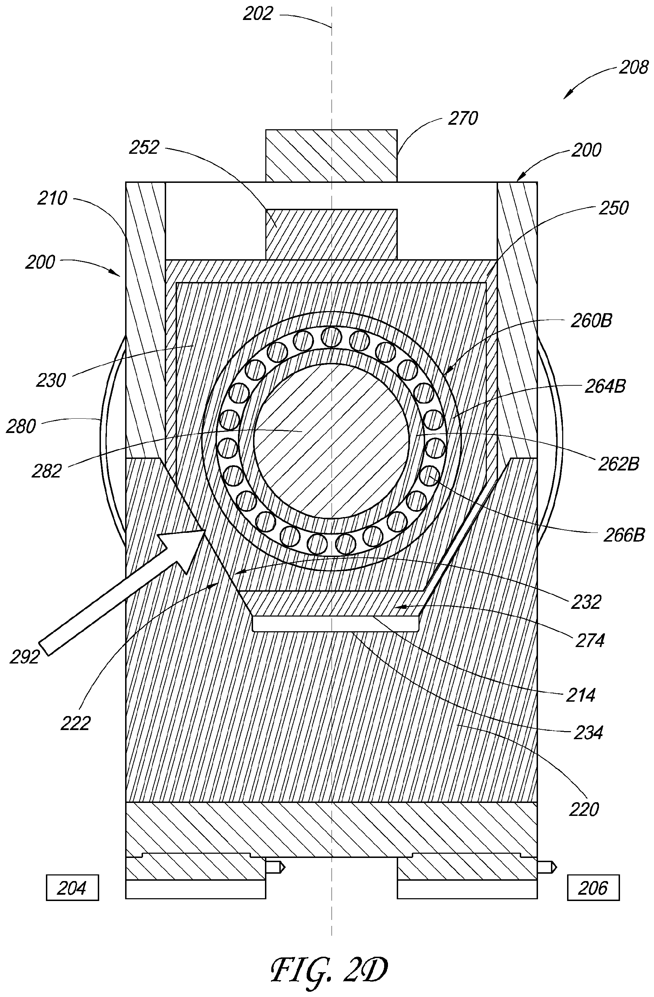

FIG. 2D is a section view of the system 208 of FIG. 2A illustrating the first reaction bearing block 230 positioned in front of the first preload bearing block 250. As shown, the first reaction bearing block 230 includes a bearing bore passing through its center. A bearing 260B is disposed in the bearing bore. The bearing 260B is a roller bearing having an outer race 264B, an inner race 262B, and a roller element 266B disposed between the inner race 262B and the outer race 264B. The first reaction bearing block 230 is positioned above the first support block 220. The first reaction bearing block 230 includes a first bearing block surface 232. The first bearing block surface 232 is on a first side 204 of a midplane 202 and is opposite of the second side 206. The midplane 202 is defined by the central axis of the journal 282 and is perpendicular to the base surface 214. The first bearing block surface 232 is disposed against a first contact surface 222 of the first support block 220. The first contact surface 222 extends from a base surface 234 of the first support block 220 at an oblique angle. Other than contacting the first contact surface 222, the outer surface of the first reaction bearing block 230 has clearance 274 in every direction from the housing 210 and the first support block 220. The clearance 274 allows the first reaction bearing block 230 to move up, down, left, or right within the housing 210 without contacting the housing 210 or the first support block 220. The journal 282 passes through the inner race 262B of the bearing 260B. There is clearance 274 between the base surface 234 and the bottom of the first reaction bearing block 230 when the journal 282 passes through inner race 262B.

The clearance 274 assures that the journal 282 can pass through the bearing 260B of the first reaction bearing block 230. The clearance 274 allows the first reaction bearing block 230 to move within the housing 210 and accommodate for tolerances in the bearings 260B, bearing bore locations, and first contact surface 222 relative to the other bearing blocks 250, 256, 240, and the housing 210 of the system 208.

The journal 282 transfers the preload force 290 through the bearing 260B into the first reaction bearing block 230. A first reaction force 292 is generated between the first contact surface 222 and the first bearing block surface 232. The first reaction force 292 is perpendicular to the first contact surface 222 and can have a horizontal component and a vertical component. The first reaction bearing block 230 transfers the first reaction force 292 into the bearing 260B. The bearing 260B transfers the first reaction force 292 into the journal 282.

The clearance 274 also assures that the first reaction force 292 is induced between the first contact surface 222 and the first bearing block surface 232. If the first reaction bearing block 230 were to contact another surface within the housing 210, the direction of the reaction force 292 would be altered.

The angle at which the first contact surface extends from the base surface of the first support block can be any angle. In some embodiments, the angle is greater than 90 degrees. In some embodiments, the angle is less than 180 degrees. In some embodiments, the angle is, or is about, 115-155 degrees. In some embodiments, the angle is, is about, is at least, is at least about, is at most, or is at most about, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179 or 180 degrees, or any range of values therebetween.

The first contact surface 222 is shown as a planar surface and the first bearing block surface 232 is also shown as a planar surface. In some embodiments, the first contact surface is a curved surface, for example such that a cross section of the first contact surface can take a parabolic or hyperbolic curve shape. In some embodiments, the first bearing block surface can include a complementary curve shape.

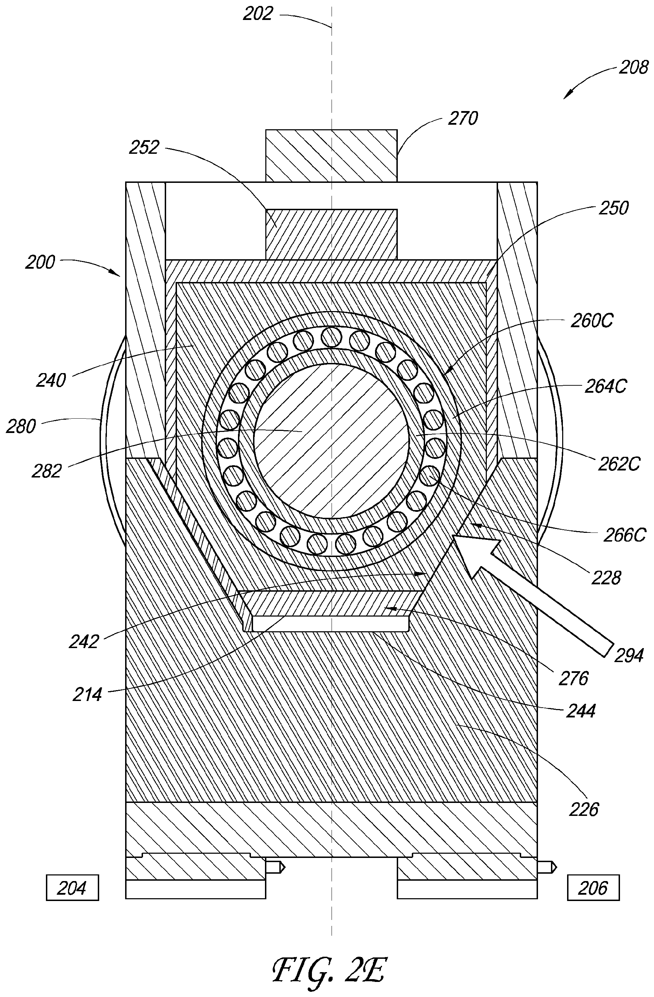

FIG. 2E is a section view of the bearing block assembly 200 illustrating the second reaction bearing block 240. As shown, the second reaction bearing block 240 includes a bearing 260C disposed in a bearing bore. The bearing 260C is a roller bearing having an outer race 264C, an inner race 262C, and a roller element 266C disposed between the inner race 262C and the outer race 264C.

The second reaction bearing block 240 is positioned above the second support block 226. The second reaction bearing block 240 includes a second bearing block surface 242. The second bearing block surface 242 is on a second side 206 of the midplane 202 and is opposite the first side 204. The second bearing block surface 242 is disposed against a second contact surface 228 of the second support block 226. The second contact surface 228 extends from a base surface 244 of the second support block 226 at an oblique angle. The first contact surface 222 and the second contact surface 228 can extend from their respective base surfaces 234 and 244 at congruent angles.

Other than contacting the second contact surface 228, the outer surface of the second reaction bearing block 240 has a clearance 276 in every direction from the housing 210 and the second support block 226. This clearance 276 allows the second reaction bearing block 240 to move up, down, left, or right within the housing 210 without contacting another surface. The journal 282 passes through the inner race 262C of the bearing 260C. There is clearance between a base surface 244 of the second support block 226 and the bottom of the second reaction bearing block 240 when the journal 282 passes through inner race 262C.

The clearance 276 assures that the journal 282 can pass through the bearing 260C of the second reaction bearing block 240. The clearance 276 allows the second reaction bearing block 240 to move within the housing 210 and accommodate for tolerances in the bearings 260C, bearing bore locations, and second contact surface 228 relative to the other bearing blocks 250, 256, 230, and the housing 210 of the system 208.

The journal 282 transfers the preload force 290 through the bearing 260C into the second reaction bearing block 240. A second reaction force 294 is generated between the second contact surface 228 and the second bearing block surface 242. The second reaction force 294 is perpendicular to the second contact surface 228 and can have a horizontal component and a vertical component. The second reaction bearing block 240 transfers the second reaction force 294 into the bearing 260C. The bearing 260C transfers the second reaction force 294 into the journal 282.

The clearance 276 also assures that the second reaction force 294 is induced between the second contact surface 228 and the second bearing block surface 242. If the second reaction bearing block 240 were to contact another surface within the housing 210, the direction of the second reaction force 294 would be altered.

The oblique angle at which the second contact surface 228 extends from the base surface 244 of the second support block 226 can be any angle greater than 90 degrees and less than 180 degrees, preferably between 115 degrees and 155 degrees. For example the oblique angle can be 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, or 179 degrees.

The second contact surface 228 can be a planar surface and the second bearing block surface 242 can also be a planar surface. A planar contact surface 228 advantageously allows for the second reaction force 294 to have the same horizontal and vertical components regardless of where within the housing 210 the second reaction bearing block 240 is situated to accommodate tolerances. The second contact surface 228 can be a curved surface. For example, the cross section of the second contact surface 228 can take a parabolic or hyperbolic curve shape and the second bearing block surface 242 can include a complementary curve shape. A curved contact surface 228 can advantageously allow the horizontal and vertical components of the second reaction force 294 to be altered depending on the positioning of the second reaction bearing block 240 in the housing 210.

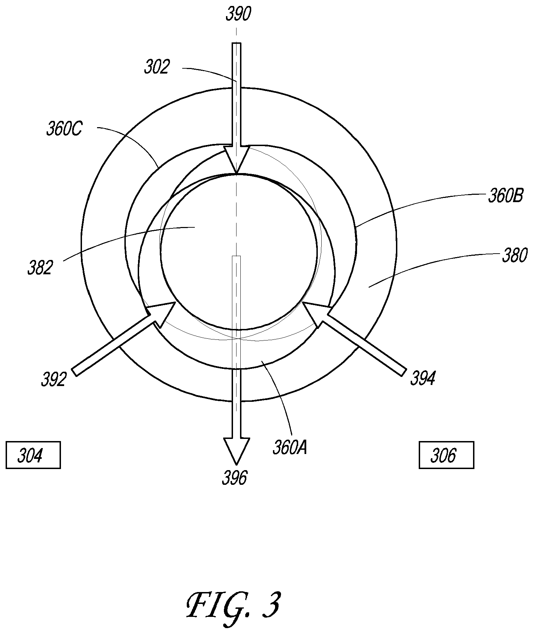

FIG. 3 is an illustration of the forces applied to bearing blocks of a bearing block assembly, according to some embodiments. FIG. 3 also illustrates how the bearing block assembly accommodates for clearance between a journal 382 and the inner races of the bearings 360A-360C. The features illustrated in FIG. 3 are exaggerated for illustrative purposes. For examples, the ratio of the size of the bearings 360A-360C to the calender are not to scale, and the clearance between the bearings 360A-360C and the journal 382 also not to scale.

As illustrated, a preload force 390, is applied to a bearing 360A and thereby to the journal 382 creating contact between the bearing 360A and a journal 382. The mass 396 of a calender 380 also induces a force in the same direction as the preload force 290. In some embodiments, the preload force may be applied in a direction other than the force induced by the mass of the calender.

This advantageously reduces, substantially reduces, eliminates or substantially eliminates play (i.e., clearance) between the bearing 360A and the journal 382 and increases stiffness within the bearing 360A. This preload force 390 and the mass 396 induces a first reaction force 392 on a first side 304 of a midplane 302 applied to a bearing 360B and thereby to the journal 382, which reduces, substantially reduces, eliminates or substantially eliminates play (i.e., clearance) between the bearing 360B and the journal 382 and increase stiffness within the bearing 360B. The preload force 390 also induces a second reaction force 394 on a second side 306 of the midplane 302 opposite from the first side 304applied to a bearing 360C and thereby to the journal 382, which reduces, substantially reduces, eliminates or substantially eliminates play between the bearing 360C and the journal 382 and increase stiffness within the bearing 360C. The preload force 390, first reaction force 392, and second reaction force 394 are each in three different directions. As illustrated, the preload force 390 is applied in plane with the midplane 302, the first reaction force 392 is induced on the first side 304 of the midplane 302, and the second reaction force 394 is induced on the second side 306 of the midplane 302. In this arrangement, the journal 382 is supported at three different points around its circumference by the bearings 360A, 360B, and 360C, and the journal 382 is loaded in three opposing directions by preload force 390, first reaction force 292 and second reaction force 394, which advantageously reduces, substantially reduces, eliminates or substantially eliminates bearing play and increases bearing stiffness thereby reducing bearing vibration. In other embodiments, the preload force can be applied at any angle (e.g., vertically, horizontally, diagonally) that may aid in countering the forces exhibited on the calender roll during the calender process.

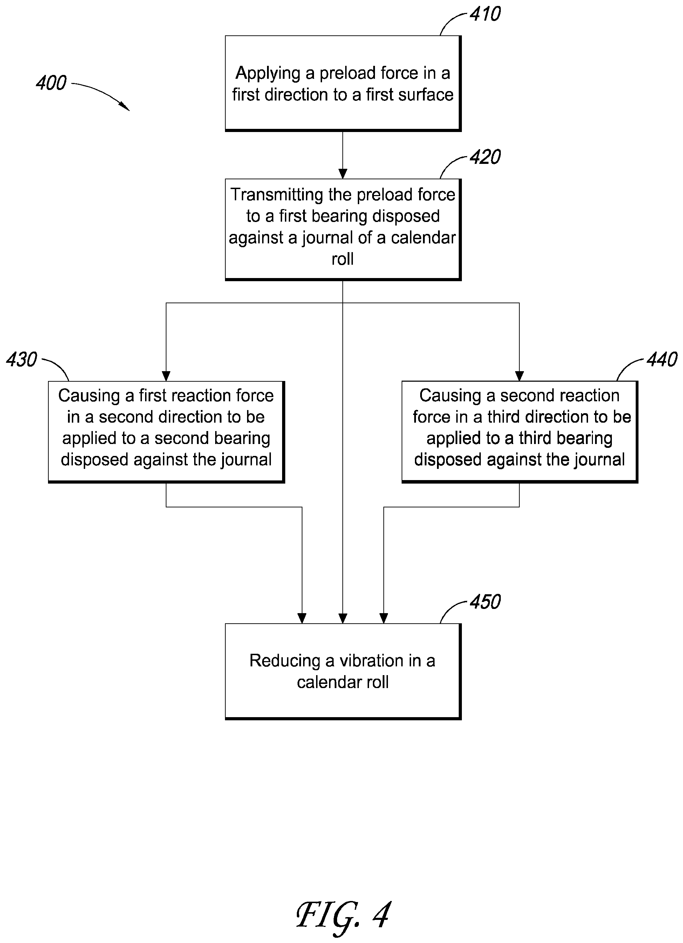

FIG. 4 is a flow chart of an example method 400 of supporting a calender roll. A preload force is applied in a first direction to a first surface at step 410, and the force is transmitted to a first bearing disposed against a journal of a calender roll at step 420. This causes a first reaction force in a second direction being applied to a second bearing disposed against the journal at step 430 and causes a second reaction force in a third direction being applied to a third bearing disposed against the journal at step 440. With the preload force, first reaction force and second reaction force applied to the journal, a reduction in a vibration in a calender roll, a reduction in bearing play and/or increasing bearing stiffness is achieved at step 450.

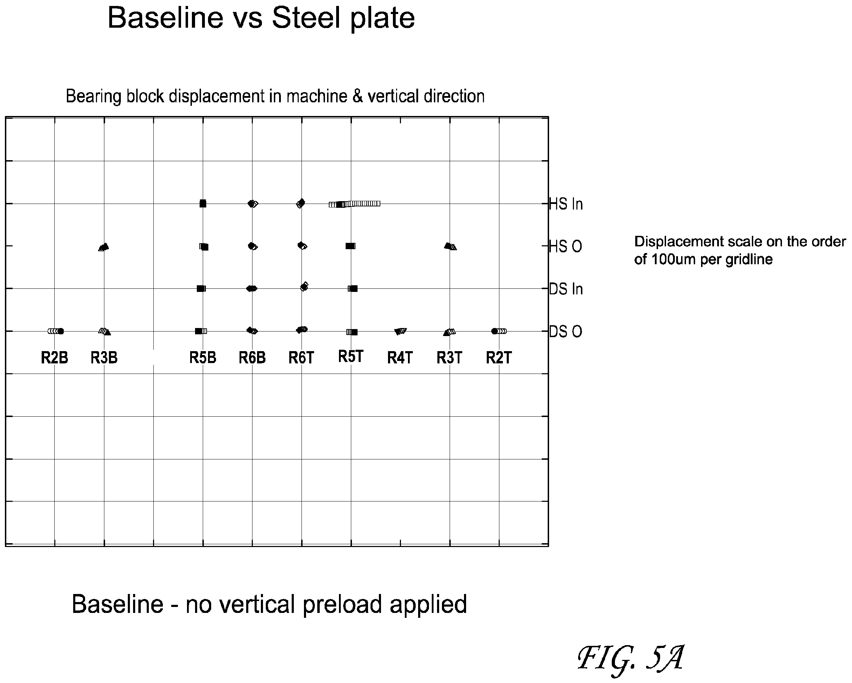

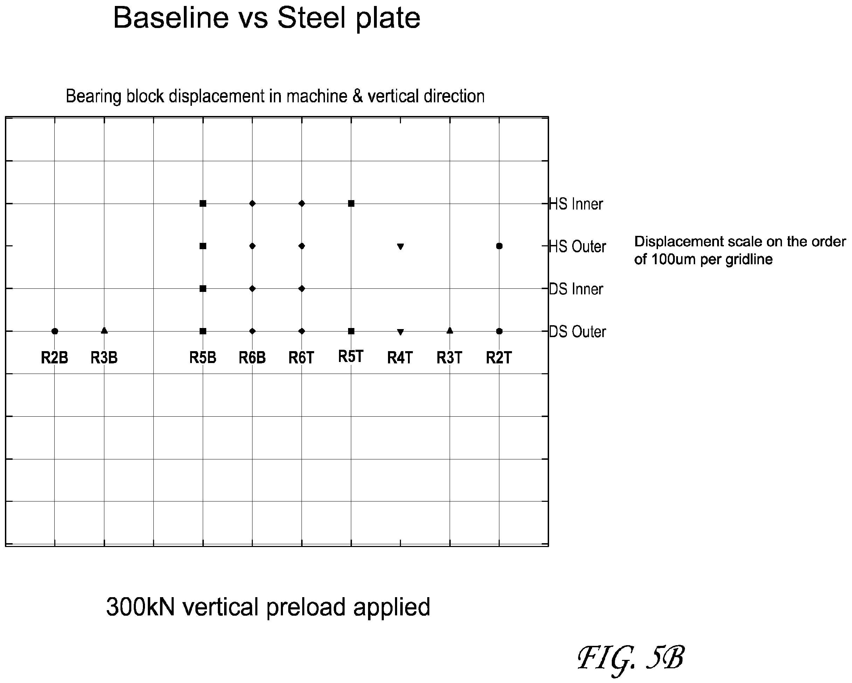

FIGS. 5A and 5B are experimental charts showing bearing block displacement. For this experiment, accelerometers were installed onto the inner and outer bearing blocks of a calender roll system. For example, a system similar to the system illustrated in FIG. 1. First, a baseline test was performed. In the baseline test, no vertical preload was applied to any of the bearing blocks. Next, a vertical preload of known force was applied to each bearing block assembly. In each of FIGS. 5A and 5B, vertical bearing block displacement for a series of bearing blocks is mapped. Each dot on the tables represents a different bearing block. Each column along the X axis represents a different bearing block assembly. Within each column, the rows along the Y axis represent each bearing block within a bearing block assembly. For both the X axis and Y axis, the scale is on the order of 100 µm per gridline. FIG. 5A illustrates the baseline testing results in which no vertical preload is applied to any of the bearing blocks. The chart shows that each bearing block exhibits vertical displacement. FIG. 5B, illustrates the testing results in which a 300kN preload force was applied to each of the bearing blocks. The chart shows that the vertical displacement is advantageously reduced in FIG. 5B compared to the FIG. 5A with bearing blocks without preload.

Although certain embodiments are described herein with respect to calender rolling systems, the bearing block assembly described may be applied to other high radial load, rotating shaft applications.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A bearing block assembly for supporting a calender roll, comprising:
a housing comprising a preload access port, a base surface, and a first side and a second side separated by a midplane perpendicular to the base surface, wherein a first contact surface extends from the base surface at a first angle and is located in the first side, and a second contact surface extends from the base surface at a second angle and is located in the second side;
a first bearing block disposed within the housing and comprising a first bearing block surface and a first bearing bore, wherein the first bearing block surface is disposed over the first contact surface;
a second bearing block disposed within the housing and comprising a second bearing block surface and a second bearing bore, wherein the second bearing block surface is disposed over the second contact surface; and
a third bearing block disposed within the housing and comprising a preload surface and a third bearing bore, wherein the preload surface is positioned between the preload access port and the base surface.

2. The bearing block assembly of claim 1, wherein the housing further comprises the first contact surface and the second contact surface.

3. The bearing block assembly of claims 1 or 2, wherein the first contact surface is disposed on a first support block and the second contact surface is disposed on a second support block, and the first and second support blocks are positioned within the housing.

4. The bearing block assembly of any one of claims 1-3, wherein each of the first angle and the second angle are congruent angles.

5. The bearing block assembly of any one of claims 1-4, further comprising a preload force applicator, preferably wherein the preload force applicator contacts the preload surface.

6. The bearing block assembly of any one of claims 1-5, further comprising a fourth bearing block disposed within the housing, the fourth bearing block comprising a fourth bearing bore.

7. The bearing block assembly of claim 7, wherein the first bearing block and second bearing block are disposed between the third bearing block and fourth bearing block.

8. The bearing block assembly of any one of claims 1-7, further comprising a plurality of bearings, preferably wherein each of the plurality of bearings is a roller bearing.

9. The bearing block assembly of claim 8, wherein the plurality of bearings comprises a first pair of bearings disposed in the first bearing bore, a second pair of bearings disposed in the second bearing bore, a third pair of bearings disposed in the third bearing bore, and a fourth pair of bearings disposed in the fourth bearing bore.

10. A system for supporting a calender roll, the system comprising:
the bearing block assembly of any one of claims 1-9; and
a calender roll comprising a first journal disposed within the first, second and third bearing bores;
preferably, further comprising an additional bearing block assembly comprising an additional bearing bore, wherein the calender roll further comprises a second journal disposed within the additional bearing bore.

11. A method of supporting a calender roll, comprising:
applying a preload force to a first surface, thereby causing:
the preload force to be transmitted to a first bearing disposed against a journal of a calender roll;
a first reaction force to be applied to a second bearing disposed against the journal; and
a second reaction force to be applied to a third bearing disposed against a journal in a third direction,
wherein the preload force is in a first direction, the first reaction force is in a second direction, and the second reaction force is in a third direction, and wherein each of the first direction, the second direction, and the third direction are different directions.

12. The method of claim 11, further comprising reducing a vibration in the calender roll.

13. The method of claims 11 or 12, wherein the first direction is in the same direction as a gravitational force, preferably wherein the preload force is at least about 100 kN.

14. The method of any one of claims 11-13, wherein the first reaction force comprises a vertical component and a horizontal component, preferably wherein the second reaction force comprises a vertical component and a horizontal component.

15. The method of any one of claims 11-14, further comprising reducing play in the first bearing, the second bearing, and the third bearing.
